# FASCICULE DE BREVET EUROPEEN

(11) **EP 1 558 690 B1**
(45) Date de publication et mention de la délivrance du brevet: **15.05.2013**
(21) Numéro de dépôt: 03778453.5
(22) Date de dépôt: 24.10.2003
(51) Int. Cl.: C09J 103/02

(54) **COMPOSITION ADHESIVE AQUEUSE A BASE D AMIDON DE LEGUMINEUSES .**
WÄSSRIGE KLEBSTOFFZUSAMMENSETZUNG AUF BASIS VON STÄRKE VON LEGUMINOSEN
AQUEOUS ADHESIVE COMPOSITION BASED ON LEGUME STARCH

(30) Priorité: 06.11.2002 FR 0213910
(43) Date de publication de la demande: 03.08.2005
(73) Titulaire: Roquette Frères, 62136 Lestrem (FR)
(72) Inventeur: GOMBERT, Hervé, F-62232-HINGES (FR); LADRET, Marika, F-59840 Lompret (FR); CORRIETTE, Pascal, f-59660 Merville (FR); HOUZE, Régis, f-59551 Tourmingnies (FR); BOUXIN, Christian, f-59274 Marquillies (FR)
(74) Mandataire: Cabinet Plasseraud
(86) Numéro de dépôt international: PCT/FR2003/003158
(87) Numéro de publication internationale: WO 2004/044082

(56) Documents cités:
- US-A- 3 444 109
- US-A- 4 587 332
- US-A- 5 454 863
- US-A- 5 641 349
- F. W. COMER ET AL: 'Purification, Modification, and Properties of Air-Classified Pea Starch' CEREAL CHEMISTRY vol. 55, 01 Janvier 1978, pages 818 - 829, XP055002736

## Description

La présente invention concerne de nouvelles compositions adhésives aqueuses élaborées essentiellement à partir d'amidons de légumineuses.

L'invention concerne plus particulièrement de nouvelles compositions adhésives aqueuses à base d'amidon de légumineuses conçues notamment pour la fabrication de cartons ondulés.

Elle vise aussi un procédé de préparation de carton ondulé faisant appel à de telles compositions constituées essentiellement d'amidon de légumineuses, en partie primaire et / ou secondaire.

Elle concerne encore le carton ondulé ainsi obtenu.

Par « amidon » au sens de la présente invention, on entend toute sorte d'amidon, en particulier de toute origine, y compris les amidons de céréales comme celui de blé, les amidons de tubercules. Les amidons selon l'invention peuvent avoir différents degrés de pureté, notamment des amidons présentant une richesse en amidon élevée, en particulier supérieure à 90% (sec/sec), parallèlement à une teneur très faible, par exemple inférieure à 1% (sec/sec) en matières colloïdales et en résidus fibreux.

De manière préférentielle, la richesse en amidon est supérieure à 95%, de préférence encore supérieure à 98% (sec/sec).

Parallèlement, la teneur en protéines est faible, soit inférieure à 1%, de préférence inférieure à 0,5%, préférentiellement encore comprise entre 0,1 et 0,35% (sec/sec).

Les amidons utilisés selon l'invention peuvent être soit à l'état natif, soit à l'état modifié.

Par « légumineuses » au sens de la présente invention, on entend plus particulièrement la famille des papilionacées, dont les représentants les plus importants sont le haricot, le pois, la lentille, la fève, la luzerne, le trèfle, le lupin.

Par « amidon de légumineuses » au sens de la présente invention, on entend les amidons extraits de légumineuses et, en particulier, de pois, présentant notamment une richesse en amidon élevée, en particulier, supérieure à 90% (sec/sec), parallèlement à une teneur très faible, par exemple inférieure à 1% (sec/sec) en matières colloïdales et en résidus fibreux.

De manière préférentielle, la richesse en amidon est supérieure à 95%, de préférence encore supérieure à 98% (sec/sec).

Parallèlement, la teneur en protéines est faible, soit inférieure à 1%, de préférence inférieure à 0,5%, préférentiellement encore comprise entre 0,1 et 0,35% (sec/sec).

Par « compositions adhésives aqueuses » au sens de la présente invention, on entend toute composition adhésive aqueuse, destinée notamment à la confection de cartons ondulés, comportant une partie d'amidon solubilisé, dite support ou primaire, présentant des propriétés suspensives suffisantes, notamment vis-à-vis d'amidon granulaire, et une partie d'amidon non solubilisé et / ou seulement hydraté, soit se trouvant à l'état de granules insolubles et / ou de granules au moins partiellement gonflés, également appelée partie secondaire.

Par exemple, de telles compositions faisant appel, en partie secondaire, à un amidon à l'état de granules insolubles, sont le plus souvent élaborées selon les principes connus de l'homme de l'art sous le nom de « procédé Stein-Hall ».

En vertu des règles qui caractérisent ledit procédé, on met en présence au moins un amidon, de l'eau et un agent alcalin. On chauffe le tout, par exemple, modérément en cuve ouverte et à la vapeur vive ou, plus violemment au moyen d'un cuiseur continu, de façon à obtenir une solution colloïdale alcaline présentant notamment des caractéristiques rhéologiques et de capacité de maintien en suspension de particules insolubles et / ou seulement hydratées, adaptées.

Cette procédure constitue un mode de préparation de la partie dite « primaire » ou « support ».

Selon d'autres règles du procédé « Stein-Hall », on prépare, à la température d'alimentation de l'eau, une dispersion rassemblant au moins eau et amidon granulaire. Le plus souvent, on leur associe un dérivé du bore, couramment, le borax. Le lait obtenu constitue la partie « secondaire ».

On procède à un mélange soigneux des parties primaire et secondaire selon diverses modalités, par exemple, de procédures continues ou discontinues.

Selon une procédure voisine, il est possible d'ajouter successivement, à la partie primaire, eau et amidon granulaire et, le plus fréquemment, le borax.

Ce procédé « Stein-Hall » est le plus ancien. Encore très répandu, il permet la préparation de compositions aqueuses d'adhésifs dont l'extrait sec final, paramètre essentiel, varie, dans la pratique courante, entre 20 et plus de 30%.

Un autre procédé, comportant une partie primaire avec amidon solubilisé, et une partie secondaire avec un amidon sous forme de granules insolubles, est connu sous le nom de procédé « PRISTIM® » (brevet européen EP 0 229 741, au nom de la Demanderesse). Dans le cadre de ce procédé, la partie primaire, ou support, est préparée par augmentation sensible de la température et sans agent alcalin.

Selon un autre procédé encore, connu sous le nom de procédé « Minocar », la partie primaire est associée à une dispersion d'amidon partiellement gonflé (brevet européen EP 0 038 627).

Quelque soit le moyen choisi permettant d'accéder à l'existence de parties primaire et secondaire, l'évolution technologique des matériels a conduit l'homme de l'art à s'orienter vers des compositions adhésives aqueuses à extraits secs élevés.

Une telle démarche offre l'intérêt de diminuer la quantité d'eau à évaporer et de parvenir à un bilan calorique plus favorable.

Le procédé « Stein-Hall » a notamment été décliné de cette façon dans de nombreux brevets. On peut citer:
- Le brevet français FR 2,386,593 qui revendique des compositions adhésives présentant un extrait sec compris entre 10 et 40% en poids,
- Le brevet européen EP 0,376,301 qui revendique des compositions particulières dont les matières sèches peuvent aller jusque 60%,
- Le brevet US 4,787,937 qui revendique une composition adhésive où un amidon riche en amylose participe au support, et une fécule de manioc à la partie secondaire.

On constate que de nombreuses démarches basées sur l'augmentation de l'extrait sec de la composition adhésive, s'appuient sur l'utilisation majeure d'amidon de maïs, éventuellement d'amidon de blé.

Dans le cadre de ces différentes solutions, la richesse en amylose de l'amidon de la partie primaire peut être très variable soit, conventionnelle, avec 20 à 28% d'amylose, ou beaucoup plus élevée et pouvant atteindre 70% et plus.

Par contre, seuls les brevets européens EP 0 627 477 et EP 0 849 342 prévoient l'usage d'un amidon présentant une teneur en amylose élevée pour la partie secondaire.

Pour le premier, l'amidon, modifié, contient au moins 40%, de préférence 50%, d'amylose. Dans le second, l'amidon contient plus de 60% d'amylose.

Une autre solution attrayante consiste à utiliser la fécule de pomme de terre dans la partie secondaire, qu'elle soit modifiée ou non.

Si de telles formulations présentent l'intérêt du « double kiss » (faculté de décollage / recollage), il est absolument impératif de prévoir, pour la partie primaire ou support, une matière amylacée autre que celles issues de fécule de pomme de terre.

En effet, la fécule de pomme de terre solubilisée ne possède pas, aux extraits secs considérés, qu'elle soit modifiée ou non, chimiquement ou physiquement, une capacité suffisante de maintien en suspension des granules de matière amylacée de la partie secondaire, quelle qu'en soit la nature, notamment si celle-ci est, elle-même, de la fécule de pomme terre native.

Cet aspect a pour conséquence directe la nécessité, pour ces compositions, de la fourniture d'au moins deux matières amylacées différentes ce qui, dans le cadre des installations actuelles de réception et de préparation, notamment continue, constitue un inconvénient important à leur utilisation.

Sur un autre plan, on constate que les approvisionnements en fécule de pomme de terre deviennent difficiles, essentiellement, de par les coûts d'extraction ainsi que par la réglementation qui lui est appliquée.

Comparativement, parmi les diverses sources de matières amylacées, celles constituées par les amidons de légumineuses, notamment de pois, peuvent être considérées comme facilement accessibles dans de bonnes conditions, en particulier économiques.

Le brevet US 4,942,191 s'intéressait déjà à la participation de farines de pois dans la formulation de colles industrielles comportant des résines formolées, notamment destinées à la fabrication de matériaux contreplaqués.

Le brevet US 4,587,332 revendique essentiellement un amidon de blé, dit « B », connu aussi de l'homme de l'art sous l'appellation d' « amidon second », de viscosité réduite, notamment obtenue par hydrolyse, mais décrit aussi un amidon de pois modifié, sujet aux mêmes contraintes de viscosité. L'amidon de pois préconisé présente une certaine richesse en substances colloïdales et en protéines.

Sont ensuite revendiqués, dans ce brevet, la contribution de l'amidon de blé second (fraction B), modifié, préféré ou de l'amidon de pois modifié dans la partie primaire d'une composition adhésive pour cartons ondulés, ainsi que les cartons ondulés obtenus.

Sur des bases relativement similaires, le brevet européen EP 0 627 478 envisage, dans sa description, la participation, entre autres amidons, d'amidons de pois dans la partie primaire, ou support, mais seuls, sont considérés des amidons présentant une richesse en amylose très élevée, supérieure à 60%, de préférence supérieure à 70%.

Dans un esprit voisin, le brevet européen EP 0 849 342 revendique l'intervention, cette fois dans la partie secondaire, d'un amidon dont la richesse en amylose est supérieure à 60%, et de façon telle que la teneur en amylose, calculée par rapport à l'amidon total, soit au moins de 15%. Il évoque aussi, dans un tel contexte, la source de tels amidons que peut constituer le pois.

Le brevet EP 0 627 477 revendique, lui, la participation, dans la partie secondaire, d'un amidon dont la richesse en amylose reste élevée, soit supérieure à 40%, de préférence 50%, amidon pour lequel une modification chimique est obligatoirement requise, notamment par oxydation, hydrolyse, estérification ou autre pour autoriser un collage à vert ou « tack » convenable, ainsi qu'une vitesse de machine susceptible d'être augmentée. Il y est notamment précisé, par la citation des enseignements du brevet US 3,532,648, qu'un apport, même partiel, dans la partie secondaire, d'un amidon, non transformé, dont la richesse en amylose est supérieure à 35%, permet d'améliorer la résistance à l'eau mais est accompagné d'une réduction de la vitesse de la machine, incompatible avec les exigences actuelles.

Sur les différentes bases énoncées ci-dessus, on a pu constater que l'augmentation de la matière sèche constitue un moyen qui a montré ses limites lors des opérations d'assemblage sur des matériels modernes. Si ces limites, révélées, sont variables selon les matières utilisées, elles n'en sont pas moins réelles, et constituent autant d'inconvénients, qu'il s'agisse de manifestations à la réalisation de la partie support, à la préparation de la composition adhésive dans son ensemble, de ses caractéristiques rhéologiques, de son comportement sur machine, critère d'autant plus important que ladite machine est rapide, ou des performances qu'elle autorise.

Il faut en effet considérer que la qualité des collages est tributaire, à la fois, des vitesses des machines, et des caractéristiques et propriétés de la composition adhésive.

Les critères relatifs à la viscosité ou à la rhéologie devenant sévères, les caractéristiques des compositions s'y rapportant doivent évoluer de façon étroite pour une circulation satisfaisante de la composition adhésive, dans les différents éléments matériels, opérationnels ou de stockage.

En particulier, l'évolution des caractéristiques rhéologiques doit être suffisamment faible pour que la composition adhésive conserve une viscosité convenable, nécessaire à son bon positionnement sur le sommet de la cannelure, ainsi qu'à un accrochage adéquat sur le papier, notamment par une pénétration adaptée.

Au-delà, pour l'homme de l'art, les nécessités de collage dit « à vert », ou « instantané », ou encore de « tack », sont particulièrement impérieuses du fait de l'augmentation des vitesses et de la réduction des temps de maintien de température et de pression.

L'homme de l'art est d'autant plus sensible à ces aspects qu'il souhaite aussi réduire les coûts énergétiques.

Ces considérations acquièrent un caractère plus aigu quand la fabrication concernée s'avère difficile. On peut en effet considérer, en toute généralité, que la fabrication de carton dit « simple face » (SF) ou « double face » (DF) ne recèle pas de difficulté majeure et, qu'en revanche, celle de cartons « double-double » (DD) ou « triple cannelure », de micro-cannelures et / ou de cartons lourds, comporte de nombreuses difficultés.

De cet examen, on peut conclure que l'homme de l'art ne dispose pas aujourd'hui de moyens conduisant à des compositions adhésives capables de satisfaire à toutes les exigences engendrées par les nécessités d'un bon fonctionnement sur les machines modernes d'assemblage, notamment de grande rapidité, qui soient à la fois :
- simples, en regard de l'importance accordée à la réduction du nombre des matières, voire l'unicité de la matière amylacée, notamment dans le cadre d'installations de préparation automatiques et / ou continues,
- peu onéreux ou, pour le moins, de coûts réduits, par comparaison à ceux inhérents, par exemple, à l'utilisation de la fécule de pomme de terre,
- libres en termes d'approvisionnement et de réglementation,
- performants, au constat des limites révélées par l'amidon de maïs, même riche en amylose, en particulier à l'élévation de matière sèche.

Au-delà, les fabricants de cartons ondulés sont confrontés, de manière courante, à des commandes relatives à des cartons ondulés présentant une résistance à l'eau. Ils disposent, pour ces cahiers de charges particuliers, de formules adaptées, comprenant des résines et des matières amylacées particulières, approvisionnées à cette seule fin, multipliant le nombre de produits amylacés.

Cet aspect revêt un caractère d'incohérence dans la mesure où l'approvisionnement multiple est à confronter à une production de cartons ondulés résistants à l'eau souvent mineure, en termes de quantités et de proportions, face aux productions traditionnelles largement majoritaires.

Un problème technique majeur et prioritaire vient s'y ajouter, consistant à intégrer les nécessités de salubrité et de santé publique à la performance globale des cartons résistants à l'eau. La problématique est aiguë par le fait que cette propriété est couramment garantie par l'usage de résines formolées. Elle est heureusement acquise grâce à des résines formolées présentant des quantités de formol libre de plus en plus faibles, permettant de limiter sensiblement les émanations.

On constate que, dans cette optique, les résines pauvres en formol libre sont relativement nombreuses sur le marché. Le choix peut être notamment guidé par la nature de la matière première, sans que l'on puisse espérer en gommer les inconvénients.

Si le soin permanent apporté a permis de réduire très sensiblement le niveau d'émanations, l'importance et la gravité des atteintes à la santé sont telles que chacun souhaite leur disparition pure et simple.

De ce point de vue, et d'une manière assez générale, l'homme de l'art n'a pas encore appris à se passer de ces résines dans la mesure où les solutions qui lui ont été proposées sont peu nombreuses.

Dans cet esprit de suppression, on retient les brevets européens EP 0 627 477, EP 0 627 478 et EP 0 849 342, déjà cités, qui proposent l'élaboration de compositions adhésives ne comportant pas de dérivés formolés.

Mais, bien qu'ayant le mérite de propositions soucieuses de la santé des manipulateurs et des consommateurs, ils n'y parviennent qu'au prix d'inconvénients majeurs :
- Celui du coût: en effet, le brevet européen EP 0 627 477 propose l'utilisation d'un amidon riche en amylose (teneur au moins égale à 40%), pour lequel la modification chimique, passage obligé, est onéreuse. Les exemples considèrent en outre, essentiellement, un amidon de maïs dont la richesse en amylose est d'environ 50%, matière première renforçant le coût, ceci dans le cadre de l'amidon secondaire, fraction largement majoritaire de la totalité de l'amidon.

Les brevets EP 0 627 478 et EP 0 849 342, décrivent l'utilisation d'amidons dont la richesse en amylose est supérieure à 60%, issus de plantes particulières renfermant un génotype favorable à la production d'amylose. Ces plantes, maïs, pois, orge ou riz demandent une culture particulière, lourde, complexe et coûteuse.
- Celui de l'approvisionnement: les brevets européens concernés ne décrivent pas expressément l'unicité de la matière première. En effet, les différentes revendications principales portent sur l'un ou l'autre des composants, de la partie primaire ou de la partie secondaire, participant à l'hétérogénéité des matières, ou l'encourageant.
- Celui des performances: le critère exposé pour conclure à la conformité de la composition adhésive vis-à-vis de la résistance à l'eau, est constitué par le test dit de « Pin Adhesion» humide, test ne correspondant pas forcément aux critères utilisés dans d'autres régions du monde, notamment en Europe, où une norme européenne existe, est appliquée et exprimée sous la forme du test « FEFCO n°9 », ni à leur sévérité.

Au vu de ces aspects, la société demanderesse considère que lesdits brevets ne sont l'expression que de solutions partielles et imparfaites au problème posé.

De façon synthétique, on peut affirmer qu'il existe une première nécessité à mettre en place des compositions aqueuses adhésives qui puissent satisfaire à toutes les exigences, présentées par les matériels modernes, notamment en termes de rhéologie et de performances, qui soient simples de mise en oeuvre, qui soient d'un coût raisonnable et, parallèlement, faciles d'accès en termes d'approvisionnement et de réglementation.

Il existe une seconde nécessité à élaborer des compositions adhésives susceptibles de développer des joints de colle résistants à l'eau qui fassent appel à la même matière première, avec l'espoir de l'unicité totale de l'approvisionnement et, parallèlement, soucieuse de l'environnement et de la santé publique.

Or, il est du mérite de la Demanderesse d'avoir établi que de telles compositions, répondant à l'ensemble de ces contraintes, peuvent être élaborées à partir d'amidons de légumineuses, notamment d'amidons de pois, au sens de la présente invention.

En d'autres termes, la présente invention concerne de nouvelles compositions aqueuses adhésives parfaitement adaptées aux machines prévoyant un développement rapide du collage.

Elle vise aussi l'amélioration des caractéristiques dites de collage à vert, de développement du collage sur les dites machines réputées rapides, de qualité de l'assemblage, notamment en termes de résistance du joint de collage, ainsi que d'autres liées, par exemple, au comportement du carton ondulé réalisé à la coupe en bout de machine d'assemblage, à la facilité de mise en forme, ou encore à la pérennité des collages et des formes.

Elle concerne encore des compostions adhésives particulières, aptes à la réalisation d'assemblages résistants à l'eau.

Plus précisément, une composition adhésive selon l'invention, satisfaisant à la première série de contraintes, relatives aux exigences des matériels modernes, notamment en termes de rhéologie et de performances, est caractérisée en ce qu'elle comprend une dispersion aqueuse présentant une partie primaire, constituée essentiellement d'un amidon solubilisé, et une partie secondaire, comportant essentiellement un amidon se trouvant à l'état de granules insolubles et / ou de granules au moins partiellement gonflés, dans laquelle l'amidon de la partie primaire comprend un amidon choisi dans le groupe constitué par les amidons de légumineuses natifs et modifiés, les amidons de céréales natifs et modifiés, et les amidons de tubercules natifs et modifiés, seuls ou en mélange entre eux.

Avantageusement selon l'invention, lorsque l'amidon de la partie primaire comprend un amidon de légumineuses, l'amidon de la partie secondaire est alors choisi dans le groupe constitué par les amidons de légumineuses natifs, les amidons de céréales et de tubercules natifs et modifiés ayant de préférence une teneur en amylose inférieure à 35% (préférentiellement 30%, plus préférentiellement 27%, plus préférentiellement encore 25%), seuls ou en mélange entre eux.

Egalement avantageusement selon l'invention, lorsque l'amidon de la partie primaire est un amidon de céréales ou de tubercules natif ou modifié, l'amidon de la partie secondaire comprend au moins un amidon de légumineuses natif.

Avantageusement selon l'invention, lesdits amidons de légumineuses présentent par ailleurs une pureté supérieure à 90%, de préférence supérieure à 95%, et plus préférentiellement encore supérieure à 98%, parallèlement à des teneurs inférieures à 1% (sec/sec) en matières colloïdales et / ou résidus fibreux, et inférieures à 1% (sec/sec) en protéines, et une teneur en amylose comprise entre 30 et 52% (sec/sec).

Cette teneur est notamment supérieure à 30,5%, de préférence supérieure à 31%, et notamment inférieure à 45%, de préférence inférieure à 40%. Elle est avantageusement comprise entre 31,5 et 39,5%.

L'invention concerne également une composition adhésive caractérisée en ce qu'elle comprend une dispersion aqueuse présentant une partie primaire, constituée essentiellement d'un amidon gélatinisé, et une partie secondaire, comportant essentiellement un amidon non gélatinisé et / ou un amidon gonflé, dans laquelle l'amidon de la partie secondaire est un amidon de légumineuses natif, et l'amidon de la partie primaire est éventuellement un amidon de légumineuses natif ou modifié.

Avantageusement selon l'invention, lesdits amidons présentent une pureté élevée, supérieure à 90%, de préférence supérieure à 95%, plus avantageusement encore supérieure à 98%, parallèlement à des teneurs faibles, par exemple et respectivement, inférieure à 1% (sec/sec) en matières colloïdales et en résidus fibreux, et inférieure à 1% en protéines, et une teneur en amylose comprise entre 30 et 52%.

Cette teneur est notamment supérieure à 30,5%, de préférence supérieure à 31%, et notamment inférieure à 45%, de préférence inférieure à 40%. Elle est avantageusement comprise entre 31,5 et 39,5%.

De préférence, ladite composition comprend entre 10 et 40%, en poids, d'amidon de légumineuses, entre 0,3 à 5%, en poids, d'une substance alcaline, ces pourcentages étant exprimés par rapport à la totalité de ladite composition. Elle comprend en outre, avantageusement, entre 0,01 à 5%, en poids par rapport à l'amidon total, de borax ou de tout autre composé chimique porteur de bore.

Au-delà, une composition adhésive selon l'invention et répondant à un ensemble de contraintes, tant en termes d'exigences élevées liées aux matériels modernes qu'en termes de résistance à l'eau, est caractérisée en ce qu'elle comprend une quantité efficace d'une résine choisie dans le groupe constitué des résines formolées et des résines synthétiques non formolées.

Selon une autre variante, une composition adhésive selon l'invention, satisfaisant les critères de résistance à l'eau, mais aussi d'hygiène et de salubrité publique, est caractérisée en ce qu'elle est, de préférence, exempte de résine formolée ou même de résine synthétique, et comprend une quantité efficace d'un agent chimique choisi parmi les sulfates, notamment, de zinc, d'alumine ou de cuivre, les composés porteurs de zirconium ou le phosphate de diammonium.

Par « quantité efficace », on entend ici une quantité de résine ou d'agent chimique au moins égale à celle permettant à ladite composition adhésive de conférer au carton ondulé final de bonnes propriétés de résistance à l'eau selon le test FEFCO n°9.

Il est encore du mérite de la demanderesse de proposer un procédé de préparation de carton ondulé adapté aux dites compositions, caractérisé en ce qu'il comprend, au moins une fois, les étapes consistant à distribuer la composition adhésive selon l'invention sur les sommets des cannelures d'une bande de papier préformée, à appliquer un papier ou carton plat sur les sommets de cannelures ainsi revêtus et à procéder à un séchage.

Il est ainsi aisé, par l'usage de compositions selon l'invention et par des moyens adaptés, de confectionner des cartons ondulés satisfaisant aux exigences de la technique, y compris pour la préparation de cartons souvent définis et connus de l'homme de l'art sous les appellations de cartons « double face », « triple cannelure », ou de cartons dits lourds, soit de grammage (masse au mètre carré) élevé, ou encore présentant un nombre de cannelures supérieur à 3, et / ou des micro-cannelures.

En d'autres termes, l'amidon de légumineuses, plus particulièrement de pois, au sens de l'invention, constitue, comme il est souhaité, un moyen simple, notamment, de par l'unicité autorisée de la matière amylacée, peu onéreux, aisément approvisionné, exempt de réglementation sévère, performant, dès lors que, dans le cadre de formulations adaptées, ledit amidon de légumineuses, et plus particulièrement, de pois représente une proportion significative de la matière amylacée présente dans la composition adhésive.

Il est aussi du mérite de la demanderesse d'avoir constaté que, de façon surprenante et inattendue, les objectifs de résistance à l'eau des joints de colle liés à l'utilisation de résines pauvres en formol libre, ou à l'absence totale de résine formolée, et même, de toute résine de réticulation ou intrinsèquement hydrophobe, peuvent être atteints de façon satisfaisante par l'usage de compositions adhésives conçues sur la base essentielle d'amidons de légumineuses, plus particulièrement, d'amidons de pois.

Plus particulièrement, selon qu'elles contiennent une résine formolée ou non, un agent de résistance à l'eau non synthétique et non formolé judicieusement choisi, elles sont susceptibles de répondre aux exigences particulières de résistance et de ne pas nuire à l'environnement, ni desservir les conditions d'hygiène et de salubrité.

Il a été en outre constaté que tous les amidons de légumineuses utilisables selon l'invention pouvaient convenir pour de telles formulations.

Plus spécifiquement, on a pu noter qu'un amidon de pois, dont la richesse en amylose est inférieure à 52%, de préférence inférieure à 45%, utilisé dans la partie primaire contribuait à améliorer sensiblement les propriétés rhéologiques de la composition adhésive.

De la même manière, l'usage d'un amidon de pois, dont la richesse en amylose est inférieure à 52%, de préférence inférieure à 45%, dans la partie secondaire, en tout ou partie, permet d'améliorer sensiblement le « tack », le collage dit « à vert », la vitesse de développement du collage et la qualité dudit collage.

Il est ainsi constaté que le fait de prévoir un amidon de légumineuses, plus particulièrement un amidon de pois, tant en partie primaire que secondaire de la composition adhésive selon l'invention, a pour effet d'agir de façon très positive sur l'ensemble des critères énoncés plus haut, soit d'améliorer l'ensemble des paramètres de fonctionnement ainsi que toutes les caractéristiques utiles aux cartons ondulés.

La Demanderesse considère par ailleurs qu'il est tout à fait possible, à la plus grande satisfaction de l'utilisateur, de se satisfaire, pour la préparation de compositions adhésives selon l'invention, de l'utilisation d'amidons de pois non modifiés, en particulier, chimiquement.

Il est toutefois bien clair que des amidons de légumineuses modifiés, éthérifiés, estérifiés ou réticulés notamment, peuvent être utilisés en partie primaire, tout en sachant que leur emploi n'est pas justifié en partie secondaire.

En effet, ces matières, qui sont normalement d'un coût plus élevé, sont, contrairement aux enseignements du brevet US 5 454 863, difficilement justifiables en partie secondaire, en regard de l'absence d'intérêt technique face aux amidons de légumineuses natifs. Par contre, elles trouvent leur justification, au sein de la partie primaire, dans une amélioration supplémentaire des propriétés rhéologiques et dans la stabilité des colles mais un gain en termes de collage « à vert », de développement de ce collage, de qualité du collage fini et de sa résistance, comparativement aux caractéristiques développées par des amidons non modifiés.

Il est aussi tout à fait possible d'utiliser des amidons de pois partiellement oxydés ou hydrolysés par l'action d'au moins un acide ou d'une enzyme, en particulier pour l'élaboration de la partie primaire, de façon à en adapter la viscosité ou à en augmenter la concentration à la préparation. Une autre solution avantageuse visant le même objectif d'ajustement de la viscosité du primaire, ou d'augmentation de sa concentration à la préparation, et permettant par ailleurs de conserver la même matière pour les parties primaire et secondaire, consiste à préparer le support en utilisant un dispositif de cuisson dit « à vapeur directe » pour la mise en solution de l'amidon de la partie primaire, notamment en continu.

De telles dispositions visant la réduction de la viscosité ont le mérite de permettre une augmentation de la matière sèche qui, dans le cadre de la mise en place de l'amidon de pois, conduit à une capacité de développement du collage plus rapide, sans que cela nuise aux caractéristiques rhéologiques des compositions adhésives concernées.

D'autres opérations de modifications sont possibles, telles que physiques comme, par exemple, les opérations thermiques connues de l'homme de l'art sous le nom d' « Annealing ou de « Hot Moisture Treatment (HMT) », thermomécaniques comme la prégélatinisation sur tambours sécheurs ou l'extrusion.

De manière particulièrement avantageuse, il peut être envisagé d'associer à l'amidon de légumineuses, natif ou modifié, au moins un agent plastifiant choisi parmi les acides hydroxycarboxyliques, leurs sels et dérivés, notamment parmi les lactates et les gluconates, la glycérine, l'éthylène glycol, le propylène glycol, les polyéthylène glycols (PEG), les polypropylène glycols (PPG) et en particulier les représentants de ces deux familles ayant une masse moléculaire inférieure à 3000, l'urée et / ou les nitrates.

Les taux de plastifiant introduits sont préférentiellement compris entre 0,1 et 20%, comptés par rapport à l'amidon, de préférence compris entre 1 et 15%, de préférence encore compris entre 2 et 10%.

Un certain nombre de matières polymères polyhydroxylées, présentant généralement de fortes viscosités, connues pour de tels usages comme les dérivés de la cellulose, des alcools de polyvinyle, des acétates de polyvinyle ou de la polyvinyl-pyrolidone peuvent constituer un apport complémentaire, notamment à la partie primaire.

Les différents aspects de la présente invention, relatifs à la formulation et à l'élaboration de compositions adhésives usuelles, vont être décrits de façon plus détaillée à l'aide des exemples qui suivent, qui ne sont aucunement limitatifs.

Sur un autre plan, mais conséquemment aux constatations particulièrement encourageantes faites à partir de l'élaboration de telles compositions adhésives entièrement formulées avec différentes qualités d'amidons de pois, présentant des taux d'amylose variables, notamment compris entre 30 et 52%, les travaux menés ont trouvé, toujours dans le souci majeur de l'unicité de la matière première et de l'approvisionnement, une suite dans l'étude et la mise au point de formules spécifiquement destinées à la résistance à l'eau.

Plus précisément, il a été observé que tous les amidons de légumineuses, et notamment les amidons de pois, au sens de la présente invention, pouvaient convenir pour ce rôle, notamment ceux dont le taux d'amylose est compris entre 30 et 52%, de préférence compris entre 30,5 et 45%, de préférence encore entre 31 et 40%. Ce taux est avantageusement compris entre 31,5 et 39,5%.

La demanderesse en conclut que ces constatations sont surprenantes et inattendues et s'opposent aux démarches poursuivies jusqu'à maintenant avec les amidons particulièrement riches en amylose, notamment les amidons de maïs riches en amylose, en particulier ceux dont la richesse est de l'ordre de 70%, voire davantage.

Hors la teneur en amylose, la matière sèche globale de la composition adhésive est un paramètre majeur pour le niveau de performances en termes de résistance à l'eau.

On a constaté que cette notion est d'autant plus importante dans le cas d'une composition adhésive selon l'invention, élaborée à partir des amidons de légumineuses, notamment, de l'amidon de pois et que, plus particulièrement dans ce cas, elle conditionne fortement le degré de résistance à l'eau.

Plus précisément, sans résine formolée, ni résine synthétique de réticulation ou intrinsèquement hydrophobe, sans l'intervention, non plus, de tout autre agent améliorant la résistance à l'eau, la demanderesse considère que, pour satisfaire aux exigences en termes de résistance à l'eau, en particulier, européennes traduites par le test FEFCO n°9, il est nécessaire d'utiliser, dans le cas de l'élaboration à partir d'amidon de légumineuses, plus particulièrement, d'amidon de pois, une composition adhésive dont la matière sèche soit supérieure à 26% environ, de préférence d'au moins 28% environ.

Par contre, et en comparaison, il a été aussi constaté qu'il existait des moyens aisément accessibles, faciles à mettre en oeuvre, pour passer outre ces recommandations, moyens qui consistent à utiliser, de façon complémentaire et en quantités faibles, au prix de modifications minimes des formules, des agents améliorant la résistance à l'eau. Ces agents sont choisis, en particulier, parmi des sels comme les sulfates, en particulier, de zinc, de cuivre ou d'alumine, le phosphate de diammonium ou encore un composé porteur de zirconium.

Le sulfate d'alumine, notamment, est un produit facilement disponible. Souvent préconisé dans les brevets, largement utilisé tant en papeterie qu'en cartonnerie, son intervention est le plus souvent justifiée par la nécessité de la présence d'ions Al+++ dans la partie humide de la machine à papier, pour des fonctions connues telles qu'une correction de pH permettant, notamment, l'arrêt d'une réaction enzymatique (brevet japonais JP 49.143) ou le gonflement de l'amidon (brevet US 3,487,033, par exemple), pour le contrôle d'une viscosité (brevet US 3,622,388, par exemple), quelquefois, pour une fonction très particulière comme, par exemple, une action de nettoyage (brevet US 4,018,959). Parallèlement, son utilisation n'a pourtant jamais été suggérée aux fins précises d'amélioration de la résistance à l'eau.

De façon plus précise encore, des ajouts en quantités tout à fait raisonnables de l'un de ces sels judicieusement choisi permettent d'accéder, pour de très bons effets de résistance à l'eau respectant la norme européenne, à des compositions dont la matière sèche est seulement supérieure à 20% environ, de préférence égale ou supérieure à 22%.

Selon une variante préférée de l'invention, l'agent améliorant la résistance à l'eau est le sulfate de zinc.

D'une autre façon encore, il reste possible d'utiliser, dans le cadre de la mise en place d'une composition adhésive selon l'invention, les résines couramment ajoutées pour l'obtention d'une résistance à l'eau convenable, telles que les résines formolées, comme les résines urée-formol, cétone-formol, résorcine-formol, phénol-formol, ou non formolées, présentant généralement une capacité de pontage et / ou un caractère hydrophobe intrinsèque.

Dans un tel contexte, on considère qu'il est possible de réduire sensiblement, et dans la plupart des cas, la quantité utile de ladite résine, quelle qu'en soit la nature et / ou de diminuer la matière sèche de la colle. On peut ainsi envisager, de façon raisonnable, des matières sèches d'environ 24%, de préférence supérieures à cette valeur, notamment égales ou supérieures à 26%.

Les différents aspects de la présente invention, relatifs aux moyens accessibles pour satisfaire aux exigences de résistance à l'eau, notamment européennes, vont être décrits de façon plus détaillée à l'aide des exemples qui ne sont aucunement limitatifs.

### Exemple 1 :

On élabore une composition adhésive selon l'invention, de type « Stein-Hall », à partir d'un amidon de pois présentant une richesse en amidon supérieure à 95%, une teneur en protéines de 0,38% et en substances colloïdales inférieure à 1%.

La richesse en amylose dudit amidon est de 36,7%.

On conduit son élaboration de façon similaire à celle pratiquée couramment pour l'utilisation unique d'amidon de blé, en parties primaire et secondaire.

On aboutit aux formules comparatives dont les paramètres essentiels sont les suivants :

| | Amidon de pois | Amidon de blé |
|---|---|---|
| partie primaire : eau | 450 ml | 450 ml |
| amidon | 41 g | 45 g |
| chauffage | 45°C | 45°C |
| Soude pure et eau | 4,5g/10 ml | 4,5g/10 ml |
| Agitation | 10 minutes | 10 minutes |
| partie secondaire: | 675 ml | 675 ml |
| eau | | |
| amidon | 332, 5 g | 330 g |
| borax | 4 g | 4 g |
| agitation | 10 minutes | 10 minutes |

| Caractéristiques | | |
|---|---|---|
| Viscosité Lory | 25 secondes | 26 secondes |
| Viscosité Brookfield | 370 mPa.s | 360 mPa.s |
| Viscosité Stein-Hall | 104 secondes | 109 secondes |
| Indice de réfraction | 4,2 | 4,3 |
| Viscosité Lory : | | |
| après 2 min. | 27,5 secondes | 30 secondes |
| après 5 min. | 30,5 secondes | 34,5 secondes |
| Après 10 min. | 35 secondes | 43 secondes |

On procède à un collage de type « Double face » :

| Pt de gélatinisation -partie secondaire après assemblage | 53°C | 53,5°C |
|---|---|---|
| Collage à vert - 95°C sur appareil Strohlein | | |
| temps ouvert O.T. 0 | 6,2 secondes | 6,8 secondes |
| temps ouvert O.T. 5 | 4,4 secondes | 4,2 secondes |
| « Pin Adhesion à sec » | | |
| 6,5 s. de chauffe à 95°C | 41,1 daN | 41,1 daN |

On constate ainsi que le comportement, tant rhéologique qu'en termes de point de gélatinisation et de qualité des collages produits, de compositions adhésives obtenues à partir d'amidon de pois conformes à l'invention, est très proche de celui présenté par des compositions élaborées avec l'amidon de blé.

Les mises en oeuvre sont en outre très voisines.

### Exemple 2 :

On procède à une comparaison sur la base de compositions traditionnelles de type « Stein-Hall ».

Plus précisément, une première composition comprend un amidon de maïs dans sa partie primaire, et une fécule de pomme de terre dans sa partie secondaire.

On établit, - comparativement, une formule permettant d'accéder à une composition ne contenant qu'un seul et même amidon de pois, tant en partie primaire que secondaire, en l'occurrence l'amidon de pois décrit dans l'exemple 1.

Les compositions réalisées correspondent ainsi aux mises en oeuvre suivantes:
- Formule A : Amidon de maïs / Fécule de p. de terre,
- Formule B : Amidon de pois / Amidon de pois.

| Matières : primaire secondaire | amidon de maïs fécule de pomme de terre | amidon de pois amidon de pois ( invention) |
|---|---|---|
| Partie primaire : eau amylacé | 116 | 132,4 |
| | 14 | 12,2 |
| Chauffage | 45°C | 42°C |
| Soude (pure) | 1,5 | 1,36 |
| agitation | 15 minutes | 10 minutes |
| secondaire : eau | 177 | 191,4 |
| température | 25°C | 25°C |
| Borax | 2 x 0,4 | 1,2 |
| amylacé | 108 | 106 |
| agitation | 15 minutes | 10 minutes |
| Total : eau | 296,6 | 328,6 |
| Total amylacé | 122 | 118,2 |
| Matière sèche globale | 29,25% | 26,65% |
| Viscosité Lory | 25 secondes | 24 secondes |
| température | 33°C | 33°C |

Les compositions, témoin à partir de la formule A d'une part, selon l'invention à partir de la formule B d'autre part, sont ensuite soumises à des essais comparatifs, à partir de différents papiers, dans le cadre de la fabrication de cartons dits « Double face » (DF) et « Double - double » (DD).

On constate qu'il est tout à fait possible de maintenir, avec les deux types de formulation A ou B, les mêmes caractéristiques relatives à la dépose de colle et à l'épaisseur du film.

Un examen attentif, mais simple, effectué au sortir de la machine, montre un collage de meilleure qualité à l'utilisation de la composition adhésive selon l'invention, comparativement à la formule témoin. Il y apparaît d'ailleurs, aussi, visiblement plus sec.

Le sentiment d'un meilleur collage est confirmé par un examen en pile, appréciation confortée par le fait que les cartons assemblés avec l'amidon de pois ne « fument » pas en pile, au contraire des cartons confectionnés avec fécule de pomme de terre.

### Exemple 3 :

On procède à la préparation de compositions adhésives, obtenues avec amidon de pois, conformément à l'invention, ou amidon de blé, selon l'exemple 1.

On recherche une bonne résistance à l'eau en ajoutant, en fin de préparation, à l'une et à l'autre de ces compositions, 7% de résine LYSPAC 1070 L, calculés par rapport à la quantité d'amidon.

Après ajout de la résine, les caractéristiques des colles sont les suivantes:

| Caractéristiques des colles | Amidon de pois (invention) | Amidon de blé |
|---|---|---|
| Viscosité Lory | 22 secondes | 18 secondes |
| Viscosité Brookfield | 280 mPa.s | 320 mPa.s |
| Viscosité Stein-Hall | 97 secondes | 100 secondes |
| Indice de réfraction | 7,2 | 7,3 |
| Viscosité Lory : | | |
| Après 2 min. | 30,5 secondes | 35 secondes |
| Après 5 min. | 41 secondes | 47 secondes |
| Après 10 min. | 64 secondes | 77,5 secondes |
| Pt de gélatinisation -partie secondaire après assemblage | 56,5°C | 57,25°C |
| Collage à vert - 95°C sur appareil Strohlein OT = 0 | 170 mJ | 145 mJ |
| Energie humide (Strohlein) | 215 mJ | 135 mJ |
| Test FEFCO n°9 - après 24 h | 100% | 60% |
| Test FEFCO n°9 - après 48 h | 100% | 40% |

On observe que les caractéristiques de viscosité de la composition adhésive obtenue à partir de l'amidon de pois sont, en présence de résine, tout à fait intéressantes, notamment quand on les compare à des compositions couramment utilisées, ici, élaborées avec l'amidon de blé.

La stabilité de la viscosité des compositions adhésives selon l'invention, après ajout de la résine, est remarquable.

Les performances de ces compositions, tant en énergie humide (« Pin Adhesion» humide) que dans le cadre des contraintes européennes du test FEFCO n°9, sont assez exceptionnelles.

### Exemple 4 :

On procède à la préparation de compositions correspondant aux formules A et B de l'exemple 2.

On ajoute en fin de préparation, respectivement:

Pour la formule A, 1,66%, comptés en sec, d'une résine cétone - formol, pauvre en formol libre, à 40% de matières sèches, par rapport à la colle totale,

Pour la formule B, 0,77%, comptés en sec, de la même résine, soit une réduction de dose de plus de 50%.

On procède à la réalisation de collages dans les mêmes conditions expérimentales que dans l'exemple 1 puis, sur les cartons obtenus, à des mesures de « Pin Adhesion » à l'état humide, selon la norme TAPPI Standard T-821 om-87.

On constate que la formulation de type B, caractérisée par la présence du seul amidon de pois et par une quantité de résine très sensiblement réduite, permet un gain de 19% de la résistance selon le Pin Adhesion à l'état humide, gain exprimé comparativement à la formulation de type A, avec amidon de maïs et fécule de pomme de terre.

### Exemple 5 :

On reprend, dans cet exemple, une démarche de comparaison entre l'amidon de blé et l'amidon de pois.

Une première phase consiste à tenter de vérifier et confirmer les tendances observées dans l'exemple 1.

Une seconde phase consiste à trouver une formulation qui permette d'atteindre la résistance à l'eau souhaitée et soit parallèlement exempte de toute résine formolée ou même de toute résine synthétique de réticulation ou intrinsèquement hydrophobe.

On choisit, pour tenter d'obtenir les meilleurs résultats, soit de satisfaire aux contraintes émises dans le cadre du test FEFCO n°9, d'ajouter du sulfate d'alumine en quantités suffisantes.

Comme on constate (tableau ci-après), il est alors préférable de modifier légèrement la formule.

**- Amidon de blé présentant un taux d'amylose de 21% - Evolution des paramètres :**

| | Formule de base | Formule avec sulfate d'Al | Formule avec sulfate d'Al, modifiée |
|---|---|---|---|
| partie primaire : eau | 450 ml | 450 ml | 450 ml |
| Amidon de blé | 43 g | 43 g | 49 g |
| Soude pure et eau | 5g/10ml | 5g/10ml | 6g/10ml |
| chauffage | 45°C | 45°C | 45°C |
| Agitation | 10 minutes | 10 minutes | 10 minutes |
| partie secondaire : eau | 630 ml | 630 ml | 630 ml |
| Amidon de blé | 377 g | 377 g | 371 g |
| borax | 4 g | 1 g | 1 g |
| Sulfate d'alumine | sans | 2 g | 2 g |
| Caractéristiques | | | |
| Viscosité Lory | 24 secondes | 20 secondes | 23 secondes |
| Viscosité Brookfield | 470 mPa.s | 500 mPa.s | 490 mPa.s |
| Viscosité Stein-Hall | 116 secondes | 116 secondes | 87 secondes |
| Indice de réfraction | 4,0 | 6,8 | 4,7 |
| Viscosité Lory | | | |
| après 2 min. | 29 secondes | 29 secondes | 25 secondes |
| Après 5 min. | 34 secondes | 44 secondes | 27 secondes |
| Après 10 min. | 40 secondes | 84 secondes | 31,5 secondes |
| Pt de gélatinisation (partie secondaire après assemblage) | 52°C | 55,5°C | 52°C |

On peut s'apercevoir que la démarche consistant simplement à procéder à l'ajout de sulfate d'alumine sans autre précaution n'est pas satisfaisante. Dans ce cas, l'évolution de la colle au stockage n'est pas acceptable, compte tenu de l'intensité du phénomène.

De même, on doit considérer que le point de gélatinisation n'est plus optimal.

Ces observations conduisent à un aménagement nécessaire de la formule.

Dans le cas présent, il est préconisé, pour un bon équilibre, de remplacer-3 parties de borax par 2 parties de sulfate d'alumine.

**Performances de collage à l'état humide :**

| Collage à vert sur appareil | | | |
|---|---|---|---|
| Strohlein - 140°C OT = 0 | 520mJ | 465 mJ | 495mJ |

| Energie humide (Strohlein) | | | |
|---|---|---|---|
| Avec mûrissement 24 h | 50 mJ | 55mJ | 75 mJ |
| Avec mûrissement 1 semaine | 60mJ | 70 mJ | 80 mJ |

| Test FEFCO n°9 | | | |
|---|---|---|---|
| Avec mûrissement 24 h | 0 | 0 | 0 |
| Avec mûrissement 1 semaine | 0 | 0 | 0 |

Bien que les collages réalisés soient satisfaisants, notamment en termes de collage « à vert », on ne peut pas, avec l'amidon de blé, espérer la plus minime satisfaction en termes de résistance à l'eau, notamment selon le test FEFCO n°9.
- Amidon de pois présentant les caractéristiques suivantes :
- un taux d'amylose de 35,3%,
- un taux de protéines de 0,21%,
- une pureté supérieure à 96%,
- une teneur en matières colloïdales inférieure à 1%,
- une teneur en lipides totaux de 0,03%.
- Evolution des paramètres :

| | Formule de base | Formule avec sulfate d'alumine, modifiée |
|---|---|---|
| partie primaire : eau | 450 ml | 450 ml |
| Amidon de pois | 39 g | 43 g |
| chauffage | 45°C | 45°C |
| Soude pure et eau | 5g/10ml | 5g/10ml |
| Agitation | 10 minutes | 10 minutes |
| partie secondaire : eau | 630 ml | 630 ml |
| Amidon de pois | 381 g | 377 g |
| borax | 4 g | 1 g |
| Sulfate d'alumine | sans | 2 g |

| Caractéristiques | | |
|---|---|---|
| Viscosité Lory | 22 secondes | 22,5 secondes |
| Viscosité Brookfield | 440 mPa.s | 530 mPa.s |
| Viscosité Stein-Hall | 102,5 secondes | 92,5 secondes |
| Indice de réfraction | 4,1 | 4,5 |

| Evolution au repos | | |
|---|---|---|
| (Lory) | 25 secondes | 24 secondes |
| Après 2 minutes | 29 secondes | 27,5 secondes |
| Après 5 minutes | 32,5 secondes | 31,5 secondes |
| Après 10 minutes | 51°C | 51,5°C |
| Point de gélatinisation (partie secondaire après assemblage) | | |

Les modifications nécessaires, opérées dans la formule contenant du sulfate d'alumine, sont tout à fait mineures, dès lors que l'on respecte ici une règle consistant à remplacer trois parties de borax par deux parties de sulfate d'alumine.

Ainsi, on atteint des caractéristiques relatives à l'évolution de la viscosité particulièrement satisfaisantes et adaptées en termes de fonctionnement de la machine et des circuits de circulation de colle.

| Collage à vert sur appareil | | |
|---|---|---|
| Strohlein 140°C OT = 0 | 520 mJ | 520 mJ |

| Energie humide (Strohlein) | | |
|---|---|---|
| Avec mûrissement 24 h | 185 mJ | 250 mJ |
| Avec mûrissement 1 semaine | 200mJ | 220 mJ |

| Test FEFCO n°9 | | |
|---|---|---|
| Avec mûrissement 24 h | 60% | 100% |
| Avec mûrissement 1 semaine | 60% | 100% |

Parallèlement à un fonctionnement adapté, de telles compositions permettent d'atteindre une résistance à l'eau certaine, insuffisante sans ajout de sulfate d'alumine, mais répondant totalement, avec ce sel d'usage courant, aux normes européennes en vigueur qui exigent une tenue au trempage de la totalité des éprouvettes, sans qu'il soit nécessaire d'ajouter la moindre résine synthétique, en particulier formolée.

### Exemple 6 :

Le principe de cet exemple consiste à appréhender l'importance du paramètre « matière sèche des colles » sur les performances que nous sommes susceptibles d'atteindre avec l'amidon de pois, en particulier, de résistance à l'eau.

L' amidon de pois est celui considéré dans l'exemple 5 :

| | Formule « Amidon de pois » 28% MS | | Formule « Amidon de pois » 22% MS | |
|---|---|---|---|---|
| | Sans sulfate d'alumine | Avec sulfate d'alumine | Sans sulfate d'alumine | Avec sulfate d'alumine |
| Partie primaire: eau | 450 ml | 450 ml | 450 ml | 450 ml |
| Amidon de pois | 33 g | 41 g | 40 g | 50 g |
| chauffage | 45°C | 45°C | 45°C | 45°C |
| Soude pure et eau | 3,5g/10ml | 5g/10ml | 4,2g/10ml | 5g/10ml |
| agitation | 10 min. | 10 min. | 10 min. | 10 min. |
| Partie secondaire eau | 630 ml | 630 ml | 720 ml | 720 ml |
| Amidon de pois | 379 g | 379 g | 290 g | 280 g |
| borax | 4 g | 1 g | 4 g | 1 g |
| Sulfate d'alumine | sans | 2 g | sans | 2 g |
| Agitation | 10 min. | 10 min. | 10 min. | 10 min. |

On peut élaborer, de façon très satisfaisante, des compositions adhésives selon l'invention, à des extraits secs aussi différents que 22 et 28%.

| Caractéristiques | | | | |
|---|---|---|---|---|
| Viscosité Lory | 21,5 sec. | 23 sec. | 21 sec. | 24 sec. |
| Viscosité Brookfield | 440 mPa.s | 550 mPa.s | 360 mPa.s | 520 mPa.s |
| Viscosité Stein-Hall | 93 sec. | 90 sec. | 80,5 sec. | 92 sec. |
| Indice de réfraction | 3,5 | 4,3 | 3,7 | 4,7 |

| Viscosité Lory : | | | | |
|---|---|---|---|---|
| Après 2 minutes | 23 sec. | 24,5 sec. | 21 sec. | 26 sec. |
| Après 5 minutes | 26,5 sec. | 28 sec. | 23,5 sec. | 30 sec. |
| Après 10 minutes | 31,5 sec. | 31,5 sec. | 27,5 sec. | 34 sec. |

| Pt de gélatinisation | | | | |
|---|---|---|---|---|
| partie secondaire | | | | |
| Avant assemblage | 51°C | 50°C | 50°C | 50°C |
| Après assemblage | 52°C | 51,5°C | 51,5°C | 52°C |

Ces compositions adhésives selon l'invention présentent des caractéristiques satisfaisantes, tant en termes de rhéologie qu'en ce qui concerne l'indice de réfraction lu et les points de gélatinisation.

| | | | | |
|---|---|---|---|---|
| Collage à vert sur appareil Strohlein 140°C OT = 0 | 525 mJ | 530 mJ | 430 mJ | 430 MJ |
| Energie humide (Strohlein) | | | | |
| Avec mûrissement 24 h | 230 mJ | 225 mJ | 140 mJ | 170 mJ |
| Avec mûrissement 1 semaine | 240 mJ | 225 mJ | 145 mJ | 190 mJ |

| Test FEFCO n°9 | | | | |
|---|---|---|---|---|
| Avec mûrissement 24 h | 100% | 100% | 0 | 20% |
| Avec mûrissement 1 semaine | 100% | 100% | 40% | 80% |
| Test « Pin Adhesion » à sec | 32 daN | 40 daN | 40 daN | 45 daN |

La différence entre les résultats obtenus, en termes de résistance à l'eau, à 22% et à 28% de matières sèches, est tout à fait significative.

Ces essais montrent qu'il est nécessaire de respecter une matière sèche minimale pour prétendre à des résultats de résistance à l'eau respectant la norme européenne qui exige la tenue de toutes les éprouvettes pendant au moins 24 heures.

### Exemple 7 :

Différents sels sont ici utilisés comme agents d'amélioration de la résistance à l'eau, en lieu et place du sulfate d'alumine précédemment considéré.

Les essais ont été réalisés sur des compositions adhésives élaborées à partir d'amidon de pois, se présentant à 22% de matières sèches soit, délibérément, dans des conditions réputées difficiles.

| | Sans agent améliorant | Sulfate d'alumine | Sulfate de zinc | Phosphate de diammonium |
|---|---|---|---|---|
| partie primaire eau | 450 ml | 450 ml | 450 ml | 450 ml |
| Amidon de pois | 40 g | 50 g | 49 g | 50 g |
| chauffage | 45°C | 45°C | 45°C | 45°C |
| Soude pure et eau | 4,2g/10ml | 5g/10ml | 5g/10ml | 5g/10ml |
| Agitation | 10 min. | 10 min. | 10 min. | 10 min. |
| partie secondaire eau | 720 ml | 720 ml | 720 ml | 720 ml |
| Amidon de pois | 290 g | 280 g | 281 g | 280 g |
| borax | 4 g | 1 g | 1 g | 1 g |
| Sulfate d'alumine | - | 2 g | - | - |
| Sulfate de zinc | - | - | 2 g | - |
| Phosphate de diammonium | - | - | - | 2 g |
| Agitation | 10 min. | 10 min. | 10 min. | 10 min. |
| Caractéristiques | | | | |
| Viscosité Lory | 21 sec. | 24 sec. | 22sec. | 21 sec. |
| Viscosité Brookfield | 360mPa.s | 520mPa.s | 530mPa.s | 480 mPa.s |
| Viscosité Stein-Hall | 80,5 sec. | 92 sec. | 94,5sec. | 82,5 sec. |
| Indice de réfraction | 3,7 | 4,7 | 4,4 | 4,7 |
| Viscosité Lory | | | | |
| Après 2 minutes | 21 sec. | 26 sec. | 27 sec. | 23,5 sec. |
| Après 5 minutes | 23,5 sec. | 30 sec. | 31 sec. | 26,5 sec. |
| Après 10 minutes | 27,5 sec. | 34 sec. | 38,5sec. | 37 sec. |
| Pt de gélatinisation (partie secondaire) | | | | |
| Avant assemblage | 50°C | 50°C | 51,5°C | 52,5°C |
| Après assemblage | 51,5°C | 52°C | 52°C | 54°C |

Les sulfates d'alumine et de zinc ont le meilleur comportement en termes de développement de viscosité et de l'évolution de celle-ci dans le temps.

| | | | | |
|---|---|---|---|---|
| Collage à vert appareil Strohlein Temps ouvert OT = 0 | 430 mJ | 430 mJ | 440 mJ | 395 mJ |
| Energie humide (Strohlein) | | | | |
| Avec mûrissement 24 h | 140 mJ | 170 mJ | 180 mJ | 160 mJ |
| Avec mûrissement 1 semaine | 145 mJ | 190 mJ | 190 mJ | 170 mJ |

| Test FEFCO n°9 | | | | |
|---|---|---|---|---|
| Avec mûrissement 24 h | - | 20% | 100% | 40% |
| Avec mûrissement 1 semaine | 40% | 80% | 100% | 60% |
| Test « Pin Adhesion » à sec | 40 daN | 45,1 daN | 46,7 daN | 47,65 daN |

Les tests sur Strohlein, qu'ils soient de collage « à vert » ou relatifs à l'énergie humide et surtout, les résultats obtenus au test FEFCO n°9, établissent une même hiérarchie favorable au sulfate de zinc, particulièrement bénéfique à la résistance à l'eau.

Elle l'est, en effet, davantage que le sulfate d'alumine dans la mesure où ce sel de zinc permet de répondre à l'exigence de la norme européenne, dès l'instant où la composition adhésive présente une matière sèche d'au moins 22%.

Cette matière sèche est à peine plus élevée que celle d'une formulation traditionnelle, plus ou moins polyvalente, hors résistance à l'eau.

On vérifie aussi, à partir des résultats enregistrés avec le phosphate de diammonium, qu'il n'y a pas corrélation entre les mesures de « Pin Adhesion» à l'état humide et le test FEFCO n°9.

### Exemple 8 :

Le principe de cet exemple consiste en des essais établissant, de façon comparative, les performances présentées en termes de résistance à l'eau et jugées selon la norme européenne FEFCO n°9, par :
- Une formule « Stein-Hall » avec amidon de pois (identique à celui de l'exemple 5, soit à 35,3% d'amylose) conforme à l'invention en primaire et en secondaire, à 28%MS et,
- Une formule « Stein-Hall » avec amidon de maïs contenant 70% d'amylose en support, et amidon de maïs en secondaire, conformément au brevet EP 0 627 478, à 28%MS,
aucune d'elles ne contenant, comme décrit dans ledit brevet, un quelconque agent autre, susceptible de conférer, ou de renforcer la résistance à l'eau.

| | Amidon de pois / amidon de pois | Amidon de maïs à 70% d'amylose / Amidon de maïs |
|---|---|---|
| Partie primaire : eau | 450 ml | 450 ml |
| amylacé | 33 g | 70 g |
| chauffage | 45°C | 55°C |
| Soude pure et eau | 3,5g/10ml | 8,5g/20ml |
| agitation | 10 min. | 10 min. |
| Partie secondaire : eau | 630 ml | 630 ml |
| amylacé | 379 g | 350 g |
| borax | 4 g | 3,5 g |
| agitation | 10 min. | 10 min. |

Les deux formulations sont élaborées de façon bien différentes, notamment en ce qui concerne l'importance de l'amidon primaire, la nécessité de chauffe et la quantité d'agent alcalin.

| Caractéristiques | | |
|---|---|---|
| Viscosité Lory | 21,5 sec. | 23 sec. |
| Viscosité Brookfield | 440 mPa.s | 1180 mPa.s |
| Viscosité Stein-Hall | 93 sec. | 114 sec. |
| Indice de réfraction | 3,5 | 6,3 |

| Viscosité Lory | | |
|---|---|---|
| Après 2 minutes | 23 sec. | 28,5 sec. |
| Après 5 minutes | 26,5 sec. | 33,5 sec. |
| Après 10 minutes | 31,5 sec. | 40,5 sec. |

| Pt de gélatinisation partie secondaire | | |
|---|---|---|
| avant assemblage | 51°C | |
| après assemblage | 52°C | 53°C |

La différence notée entre les indices de réfraction est à attribuer essentiellement aux parts d'amidon primaire envisagées.

Outre le fait que la formule à base d'amidon de pois selon l'invention ne comporte qu'une seule matière première amylacée, à la différence de la formule faisant apparaître une qualité riche en amylose, spécifique et coûteuse, on note que la viscosité Brookfield élevée, obtenue avec l'utilisation d'amidon riche en amylose dans le primaire, pour une même viscosité Lory, par écoulement, traduit l'observation d'une colle notoirement plus courte et plus flasque, éventuellement susceptible de réduire la vitesse, et pour laquelle les réglages de machine sont certainement à modifier.

Parallèlement, l'évolution de la viscosité dans le temps, plus rapide dans ce cas, est néfaste.

| Collage à vert- appareil | | |
|---|---|---|
| Strohlein 140°C - OT = 0 | 525 mJ | 535 mJ |

| Energie humide (Strohlein) | | |
|---|---|---|
| Avec mûrissement 24 h | 230 mJ | 235 mJ |
| Avec mûrissement 1 semaine | 240 mJ | 240 mJ |

| Test FEFCO n°9 | | |
|---|---|---|
| Avec mûrissement 24 h | 100% | 40% |
| Avec mûrissement 1 semaine | 100% | 100% |

Si les valeurs de collage à vert, favorables à la vitesse, ou d'énergie nécessaire à la séparation à l'état humide sont voisines, les résultats obtenus par le test FEFCO n°9, sont sensiblement différents et significativement à l'avantage de la formule « amidon de pois / amidon de pois » conforme à l'invention.

### Exemple 9 :

Cet exemple illustre le cas plus particulier de l'élaboration d'une colle selon le procédé connu de l'homme de l'art sous le nom de procédé « MINOCAR », consistant en la confection d'un support (primaire) comprenant essentiellement des granules d'amidon de pois partiellement gonflés, auquel une partie secondaire, constituée d'amidon de pois granulaire, est ajoutée.

Il est ainsi possible de parvenir, par exemple, à la formule suivante :
1 - confection de la partie primaire :
   Eau : 10,
   Amidon de pois (identique à celui de l'exemple 5, soit à 35,3% d'amylose) : 143,
   Réglage de la température à 33°C,
   Solution, à 4,9 de soude pure pour 10 d'eau, introduite en 5 minutes,
   Agitation à 1750 tours par minute,
   Arrêt de la réaction, par le sulfate d'alumine, après 11 minutes,
2 - Introduction du secondaire :
   eau : 209,
   amidon de pois (35,3% d'amylose) granulaire : 285, eau : 79,
   borax :2,0,
   Agitation à 1750 tours par minute, pendant 15 minutes.

Les caractéristiques présentées par la colle sont les suivantes :
Viscosité Lory : 15,5 secondes,
Viscosité Brookfield : 730 mPa.s,
Indice de refraction: 1,9,
Point de gélatinisation : 46,5°C.

Une telle colle permet de prétendre aux performances essentielles suivantes :

| | |
|---|---|
| Collage à vert- appareil Strohlein 110°C - OT = 0 | 250 mJ |

| Energie humide (Strohlein) | |
|---|---|
| Avec mûrissement 24 h | 185 mJ |
| Avec mûrissement 1 semaine | 190 mJ |

| Test FEFCO n°9 | |
|---|---|
| Avec mûrissement 24 h | 80% |
| Avec mûrissement 1 semaine | 100% |

Dans le cadre d'un apport calorique limité, les performances, notamment en termes de résistance à l'eau selon le test FEFCO n°9 sont jugées excellentes.

### Exemple 10 :

Le principe de cet exemple consiste en un objectif un peu plus particulier encore, soit l'élaboration d'un produit prêt à l'emploi qui puisse présenter les performances de collage souhaitées et satisfaire aussi aux exigences de résistance à l'eau, en particulier selon le test FEFCO n°9.

Les travaux concernés par cet exemple ont pris en compte des éléments essentiels tels que matière sèche à l'utilisation et nature de la matière amylacée pré-solubilisée, ainsi que son éventuelle modification, notamment chimique.

Une formulation, particulièrement satisfaisante d'un point de vue technique et attrayante sous l'aspect du prix de revient, est ainsi établie :

| | Participation (en pourcentage) |
|---|---|
| Amidon de maïs à 70% d'amylose, pré-gélatinisé | 5,8 |
| Amidon de pois à 35,3% d'amylose, pré-gélatinisé | 5,8 |
| Amidon de pois à 35,3% d'amylose, granulaire | 85,75 |
| Carbonate de sodium | 1 |
| Chaux éteinte | 0,7 |
| borax | 0,95 |

Une colle est confectionnée, par ajout d'eau, de façon à présenter une matière sèche égale à 28%.

Elle présente les caractéristiques suivantes :

| | |
|---|---|
| Viscosité Lory | 28 secondes |
| Viscosité Brookfield | 450 mPa.s |
| Indice de réfraction | 4,8 |
| Point de gélatinisation | 52,5°C |

Les mesures de viscosité à l'écoulement (Lory) et au cisaillement (Brookfield) traduisent la qualité de texture constatée à cette confection de colle.

Le point de gélatinisation est tout à fait adapté à l'usage.

| | |
|---|---|
| Collage à vert- appareil Strohlein 140°C - OT = 0 | 625 mJ |

| Energie humide (Strohlein) | |
|---|---|
| Avec mûrissement 24 h | 260 mJ |
| Avec mûrissement 1 semaine | 270 mJ |

| Test FEFCO n°9 | |
|---|---|
| Avec mûrissement 24 h | 100% |
| Avec mûrissement 1 semaine | 100% |

Les résultats apparaissent particulièrement intéressants, que ce soit en termes de collage à vert, d'énergie humide et, notamment, de résistance à l'eau selon le test FEFCO n°9.

## Revendications

1. Composition adhésive **caractérisée en ce qu'**elle comprend une dispersion aqueuse présentant une partie primaire, constituée essentiellement d'un amidon gélatinisé, et une partie secondaire, comportant essentiellement un amidon non gélatinisé et/ou un amidon gonflé, ladite composition adhésive comprenant un amidon de légumineuse, et dans laquelle :
soit (A) l'amidon de la partie primaire comprend un amidon choisi dans le groupe constitué par les amidons de légumineuses natifs et modifiés, les amidons de céréales natifs et modifiés, et les amidons de tubercules natifs et modifiés, seuls ou en mélange entre eux, et
- lorsque l'amidon de la partie primaire comprend un amidon de légumineuses, l'amidon de la partie secondaire est alors choisi dans le groupe constitué par les amidons de légumineuses natifs, les amidons de céréales et de tubercules natifs et modifiés ayant une teneur en amylose inférieure à 30%, seuls ou en mélange entre eux, et,
- lorsque l'amidon de la partie primaire est un amidon de céréales ou de tubercules natif ou modifié, l'amidon de la partie secondaire comprend au moins un amidon de légumineuses natif;
lesdits amidons de légumineuses présentant par ailleurs une pureté supérieure à 90%, de préférence supérieure à 95%, et plus préférentiellement encore supérieure à 98%, parallèlement à des teneurs inférieures à 1% (sec/sec) en matières colloïdales et/ou résidus fibreux, et inférieures à 1% (sec/sec) en protéines, et une teneur en amylose comprise entre 30 et 52% (sec/sec) ;
soit (B) l'amidon de la partie secondaire est un amidon de légumineuses natif et l'amidon de la partie primaire est éventuellement un amidon de légumineuses natif ou modifié,
lesdits amidons présentant une pureté supérieure à 90%, de préférence supérieure à 95%, plus avantageusement encore supérieure à 98%, des teneurs respectivement inférieure à 1% (sec/sec) en matières colloïdales et en résidus fibreux, et inférieure à 1% (sec/sec) en protéines, et une teneur en amylose comprise entre 30 et 52% (sec/sec).

2. Composition adhésive selon la revendication 1, **caractérisée en ce que** la teneur en amylose du ou des amidons de légumineuses est comprise entre 30,5 et 45%, de préférence supérieure à 31% et inférieure à 40%, notamment comprise entre 31,5 et 39, 5% (sec/sec).

3. Composition adhésive selon l'une ou l'autre des revendications 1 ou 2, **caractérisée en ce qu'**elle comprend entre 10 et 40%, en poids, d'amidon de légumineuses, par rapport à la totalité de ladite composition.

4. Composition adhésive selon l'une quelconque des revendications 1 à 3, **caractérisée en ce qu'**elle comprend 0,3 à 5%, en poids, d'une substance alcaline, par rapport à la totalité de ladite composition.

5. Composition adhésive selon l'une quelconque des revendications 1 à 4, **caractérisée en ce qu'**elle contient 0,01 à 5%, en poids par rapport à l'amidon total, de borax ou de tout autre composé chimique porteur de bore.

6. Composition adhésive selon l'une quelconque des revendications 1 à 5, **caractérisée en ce qu'**elle présente une matière sèche supérieure à 26%, de préférence égale ou supérieure à 28%.

7. Composition adhésive selon l'une quelconque des revendications 1 à 6, **caractérisée en ce qu'**elle comprend une quantité d'un agent chimique au moins égale à celle permettant à ladite composition adhésive de conférer au carton ondulé final de bonnes propriétés de résistance à l'eau selon le test FEFCO n 9, ledit agent chimique étant choisi parmi les sulfates, notamment, de zinc, d'alumine ou de cuivre, les composés porteurs de zirconium ou le phosphate de diammonium.

8. Composition adhésive selon la revendication 7, **caractérisée en ce qu'**elle présente une matière sèche supérieure à 20%, de préférence égale ou supérieure à 22%.

9. Composition adhésive selon la revendication 8, caractérisée en co qu'elle présente une matière sèche supérieure à 24%, de préférence égale ou supérieure à 26%.

10. Composition adhésive selon l'une quelconque des revendications 1 à 9, **caractérisée en ce qu'**elle comprend une quantité d'une résine au moins égale à celle permettant à ladite composition adhésive de conférer au carton ondulé final de bonnes propriétés de résistance à l'eau selon le test FEFCO n 9 ladite résine étant choisie dans le groupe constitué des résines formolées et des résines synthétiques non formolées.

11. Procédé de préparation de carton ondulé, **caractérisé en ce qu'**il comprend, au moins une fois, les étapes suivantes :
- application sur les sommets des cannelures d'une bande de papier préformée, d'une composition adhésive selon l'une quelconque des revendications 1 à 10,
- application d'un papier ou d'un carton plat sur les sommets de cannelures ainsi revêtus de la composition adhésive,
- séchage.

12. Carton ondulé comprenant une composition adhésive selon les revendications 1 à10.

13. Carton ondulé selon la revendication 12, **caractérisé par le fait qu'**il présente une résistance à l'eau selon les critères définis par le test FEFCO n 9.

14. Carton ondulé selon l'une des revendications 12 ou 13, **caractérisé en ce qu'**il est choisi dans le groupe constitué par les cartons dits simple face , double face , triple cannelure , les cartons dits lourds, les cartons présentant un nombre de cannelures supérieur à 3, et/ou des micro-cannelures.

## Patentansprüche

1. Klebstoffzusammensetzung **dadurch gekennzeichnet, dass** sie eine wässrige Dispersion umfasst, welche einen Primärteil bestehend im Wesentlichen aus Quellstärke, und einen Sekundärteil bestehend im Wesentlichen aus nicht gelatinisierter Stärke und / oder aufgequollener Stärke aufweist, wobei die adhäsive Zusammensetzung eine Leguminosenstärke umfasst, und wobei:
entweder (A) die Stärke des Primärteils eine Stärke umfasst, welche aus der Gruppe ausgewählt wird bestehend aus nativen und modifizierten Leguminosenstärken, nativen und modifizierten Getreidestärken, und nativen und modifizierten Knollenstärken, alleine oder in einer Mischung davon, und
- wenn die Stärke des Primärteils eine Leguminosenstärke umfasst, wird die Stärke des Sekundärteils aus der Gruppe ausgewählt bestehend aus nativen Stärken von Leguminosenstärken, nativen und modifizierten Getreiden und Knollenstärken, welche einen Amylosegehalt von weniger als 30 % aufweisen, alleine oder in einer Mischung davon, und,
- wenn die Stärke des Primärteils eine native oder modifizierte Getreiden oder Knollenstärke ist, umfasst die Stärke des Sekundärteils mindestens eine native Leguminosenstärke;
wobei die Leguminosenstärken außerdem eine Reinheit von mehr als 90 %, vorzugsweise mehr als 95 %, und besonders bevorzugt mehr als 98 %, sowie einen Gehalt von weniger als 1 % (trocken / trocken) an kolloidalen Stoffen und / oder fasrigen Rückständen, und einen Proteingehalt von weniger als 1 % (trocken / trocken), und einen Amylosegehalt, welcher zwischen 30 und 52 % (trocken / trocken) liegt, aufweisen;
oder (B) die Stärke des Sekundärteils eine native Leguminosenstärke ist und die Stärke des Primärteils gegebenenfalls eine native oder modifizierte Leguminosenstärke ist,
wobei die Stärken eine Reinheit von mehr als 90 %, vorzugsweise mehr als 95 %, und besonders bevorzugt mehr als 98 %,jeweils einen Gehalt von weniger als 1 % (trocken / trocken) an kolloidalen Stoffen und fasrigen Rückständen, und ein Proteingehalt von weniger als 1 % (trocken / trocken), und einen Amylosegehalt, welcher zwischen 30 und 52 % (trocken / trocken) liegt, aufweisen.

2. Klebstoffzusammensetzung nach Anspruch 1, **dadurch gekennzeichnet, dass** der Amylosegehalt von der oder den Leguminosenstärke(n) zwischen 30,5 und 45 %, vorzugsweise mehr als 31 % und weniger als 40 %, insbesondere zwischen 31,5 und 39,5 % (trocken / trocken) liegt.

3. Klebstoffzusammensetzung nach einem der Ansprüche 1 oder 2, **dadurch gekennzeichnet, dass** sie zwischen 10 und 40 Gew.-% Leguminosenstärke bezogen auf die gesamte Zusammensetzung umfasst.

4. Klebstoffzusammensetzung nach einem der Ansprüche 1 bis 3, **dadurch gekennzeichnet, dass** sie 0,3 bis 5 Gew.-% einer alkalischen Substanz, bezogen auf die gesamte Zusammensetzung, umfasst.

5. Klebstoffzusammensetzung nach einem der Ansprüche 1 bis 4, **dadurch gekennzeichnet, dass** sie 0,01 bis 5 % von Borax oder von irgendeiner chemischen borhaltigen Verbindung, im Verhältnis zu der gesamten Stärke, umfasst.

6. Klebstoffzusammensetzung nach einem der Ansprüche 1 bis 5, **dadurch gekennzeichnet, dass** sie eine Trockenmasse von mehr als 26 %, vorzugsweise von 28 % oder mehr aufweist.

7. Klebstoffzusammensetzung nach einem der Ansprüche 1 bis 6, **dadurch gekennzeichnet, dass** sie eine Menge einer chemischen Substanz umfasst, welche mindestens gleich der Menge ist, die es der Klebstoffzusammensetzung ermöglicht, einer finalen Wellpappe gute Beständigkeitseigenschaften gegenüber Wasser gemäß des FEFCO Tests Nr. 9 zu verleihen, wobei die chemische Substanz ausgewählt wird aus Sulfaten, insbesondere, von Zink, Aluminium oder Kupfer, zirkoniumhaltigen Verbindungen oder Diammoniumphosphat.

8. Klebstoffzusammensetzung nach Anspruch 7, **dadurch gekennzeichnet, dass** sie eine Trockenmasse von mehr als 20 %, vorzugsweise von 22 % oder mehr aufweist.

9. Klebstoffzusammensetzung nach Anspruch 8, **dadurch gekennzeichnet, dass** sie eine Trockenmasse von mehr als 24 %, vorzugsweise von 26 % oder mehr aufweist.

10. Klebstoffzusammensetzung nach einem der Ansprüche 1 bis 9, **dadurch gekennzeichnet, dass** sie eine Menge eines Harzes, welche mindestens gleich der Menge ist, die es der Klebstoffzusammensetzung ermöglicht, einer finalen Wellpappe gute Beständigkeitseigenschaften gegenüber Wasser gemäß des FEFCO Tests Nr. 9 zu verleihen, wobei das Harz aus der Gruppe bestehend aus Formaldehyd-haltigen Harzen und synthetischen nicht-Formaldehyd-haltigen Harzen, ausgewählt ist.

11. Verfahren zur Herstellung von Wellpappe, **dadurch gekennzeichnet, dass** es, mindestens einmal, die folgenden Schritte umfasst:
- Aufbringen einer Klebstoffzusammensetzung nach einem der Ansprüche 1 bis 10 auf die Scheitel der Rillen eines vorgeformten Papierbandes,
- Aufbringen eines Papiers oder eines flachen Kartons auf die mit der Klebstoffzusammensetzung beschichteten Scheitel der Rillen,
- Trocknen.

12. Wellpappe umfassend eine adhäsive Zusammensetzung nach einem der Ansprüche 1 bis 10.

13. Wellpappe nach Anspruch 12, **dadurch gekennzeichnet, dass** sie eine Beständigkeit gegenüber Wasser nach den Kriterien, welche in dem Test FEFCO Nr. 9 definiert sind, aufweist.

14. Wellpappe nach einem der Ansprüche 12 oder 13, **dadurch gekennzeichnet, dass** sie aus der Gruppe ausgewählt ist bestehend aus den sogenannten einseitigen, beidseitigen, dreirilligen Pappen, sogenannten schweren Pappen, Pappen, welche eine Anzahl an Rillen größer als 3 und / oder Mikrorillen aufweisen.

## Claims

1. Adhesive composition, **characterized in that** it comprises an aqueous dispersion having a primary part, composed essentially of a gelatinized starch, and a secondary part, essentially comprising a nongelatinized starch and/or a swollen starch, said adhesive composition comprising a legume starch, in which:
whether (A) the starch of the primary part comprises a starch selected from the group consisting of native and modified legume starches, native and modified cereal starches, and native and modified tuber starches, alone or as mixture with one another, and,
- when the starch of the primary part comprises a legume starch, the starch of the secondary part is then selected from the group consisting of native legume starches, native and modified cereal starches and native and modified tuber starches having an amylose content of less than 30%, alone or as a mixture with one another, and,
- when the starch of the primary part is a native or modified cereal or tuber starch, the starch of the secondary part comprises at least one native legume starch,
said legume starches furthermore exhibiting a purity of greater than 90%, preferably of greater than 95% and more preferably still of greater than 98%, as well as colloidal matter and/or fibrous residue contents of less than 1% (dry/dry), and protein contents of less than 1% (dry/dry), and an amylose content of between 30 and 52% (dry/dry).
whether (B) the starch of the secondary part is a native legume starch and the starch of the primary part is optionally a native or modified legume starch,
said starches exhibiting a purity of greater than 90%, preferably of greater than 95% and more preferably still of greater than 98%, colloidal matter and/or fibrous residue contents of less than 1% (dry/dry), and protein contents of less than 1% (dry/dry), and an amylose content of between 30 and 52% (dry/dry).

2. Adhesive composition according to Claim 1, **characterized in that** the amylose content of the legume starch or starches is between 30.5 and 45%, preferably greater than 31% and less than 40%, in particular between 31.5 and 39.5% (dry/dry).

3. Adhesive composition according to any one of Claims 1 and 2, **characterized in that** it comprises between 10 and 40% by weight of legume starch, with respect to the whole of said composition.

4. Adhesive composition according to any one of Claims 1 to 3, **characterized in that** it comprises between 0.3 to 5% by weight of an alkaline substance, with respect to the whole of said composition.

5. Adhesive composition according to any one of Claims 1 to 4, **characterized in that** it comprises between 0.01 to 5% by weight, with respect to the total starch, of borax or of any other boron-carrying chemical compound.

6. Adhesive composition according to any one of Claims 1 to 5, **characterized in that** it exhibits a solids content of greater than 26%, preferably equal to or greater than 28%.

7. Adhesive composition according to any one of Claims 1 to 6, **characterized in that** it comprises an amount of a chemical agent at least equal to that which allows said adhesive composition to confer, on the final corrugated fibreboard, good properties of resistance to water according to the FEFCO no. 9 test, said chemical agent selected among sulphates, in particular zinc sulphate, alumin sulphate or copper sulphate, zirconium-carrying compounds or diammonium phosphate.

8. Adhesive composition according to Claim 7, **characterized in that** it exhibits a solids content of greater than 20%, preferably equal to or greater than 22%.

9. Adhesive composition according to Claim 8, **characterized in that** it exhibits a solids content of greater than 24%, preferably equal to or greater than 26%.

10. Adhesive composition according to any one of Claims 1 to 9, **characterized in that** it comprises an effective amount of a resin at least equal to that which allows said adhesive composition to confer, on the final corrugated fibreboard, good properties of resistance to water according to the FEFCO no. 9 test, said resin selected from the group consisting of formaldehyde resins and of formaldehyde-free synthetic resins.

11. Process for the preparation of corrugated fibreboard, **characterized in that** it comprises, at least once, the following steps:
- application, to the tips of the flutes of a preshaped paper strip, of an adhesive composition according to any one of Claims 1 to 10,
- application of a flat paper or of a flat fibreboard to the flute tips thus coated with the adhesive composition,
- drying.

12. Corrugated fibreboard, comprising an adhesive composition according to Claims 1 to 10.

13. Corrugated fibreboard according to Claim 12, **characterized in that** it exhibits a resistance to water according to the criteria defined by the FEFCO No. 9 test.

14. Corrugated fibreboard according to either of Claims 12 and 13, **characterized in that** it is selected from the group consisting of "single face", "double face", "triple wall" fibreboard, "heavy" fibreboard, fibreboard exhibiting a number of flutes of greater than 3, and/or microflutes.
